(19) Europäisches Patentamt
European Patent Office
Office européen des brevets

(11) **EP 4 640 644 A1**

(12) **EUROPEAN PATENT APPLICATION**

(43) Date of publication:
**29.10.2025 Bulletin 2025/44**

(21) Application number: 24382454.7

(22) Date of filing: **25.04.2024**

(51) International Patent Classification (IPC):
***C03B 33/03*** (2006.01)   ***C03B 33/07*** (2006.01)

(52) Cooperative Patent Classification (CPC):
**C03B 33/03; C03B 33/078**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Tur & Development SL**
**44415 Teruel (ES)**

(72) Inventor: **Tomás Martin, Miguel**
**44415 Rubielos de Mora Teruel (ES)**

(74) Representative: **Nederlandsch Octrooibureau**
**P.O. Box 29720**
**2502 LS The Hague (NL)**

(54) **A CUTTING METHOD FOR CUTTING A LAMINATED GLASS PLATE**

(57)   Method for cutting laminated glass plate along a diagonal cutting line with a cutting table comprising a cutting bridge and a first reference point arranged to move on the surface of the table along a direction perpendicular to the cutting bridge, the method comprising positioning the first reference point at a predetermined distance from the cutting bridge, positioning the laminated glass plate on the surface of the cutting table using the first reference point to place a corner of the laminated glass plate at the first reference point such that said corner is at predetermined distance from the cutting bridge and the peripheral side of the laminated glass plate forms desired angle, and cutting the laminated glass plate along the diagonal cutting line.

## Fig. 4A

## Description

### SUBJECT MATTER OF THE INVENTION

The present invention relates to a cutting method for a glass cutting table to cut a laminated glass plate. The present invention further related to a glass cutting table arranged to perform said cutting method.

### BACKGROUND OF THE INVENTION

Laminated glass plates comprise an upper glass sheet and a lower glass sheet arranged extending one above the other and connected by a central plastic film or sheet that extends between the upper and the lower glass sheets keeping them together. The central plastic film or sheet may be, for instance, a polyvinyl plastic film.

Glass cutting tables for laminated glass panels usually comprise two processing heads, one on the upper bridge and the other on the lower bridge wherein each processing tool may comprise tools for scoring, breaking the glass plate and cutting the plastic film.

Also known is the use in such glass cutting tables of cutting and separating systems that allow the laminated glass panel to be broken after being scratched by the scoring tools and the resulting pieces to be separated so that the polyvinyl plastic film inside can be cut.

In this way, once the laminated glass plate has been scratched, and by means of the mechanical breaking system, the lower and upper glass sheets are completely broken following the previous scratching. Once broken, separation forces are exerted on each piece resulting from the cutting while heat is applied to the entire length of the cut, so that as the inner polyvinyl sheet is heated and softened, the two pieces are separated, generating a sufficient separation to be able to introduce a blade in this separation and cut the inner polyvinyl sheet.

Therefore, in this type of machine, the laminated glass panel must be positioned in such a way that the future line to be cut coincides with the cutting line of the upper and lower bridges. Once in this position, the laminated glass panel does not move again until the tools of the processing bridge complete the processing.

Traditional positioning systems are based on the side of the workpiece being positioned parallel to the cutting bridges and with an edge at a distance from the cutting bridge equal to the size of the workpiece to be cut.

However, these positioning systems do not allow the positioning in the desired position of pieces in which the side to be processed does not have another parallel reference side. As workpieces with inclined sides are always inscribed within a larger rectangular initial workpiece, conventional positioning systems are not able to position all those sides that are not parallel to the initial rectangular workpiece.

### DESCRIPTION OF THE INVENTION

The invention relates to a cutting method for a glass cutting table for cutting a laminated glass plate, wherein the laminated glass plate is to be cut along at least a first diagonal cutting line forming a first angle other than zero and other than 90 degrees with a peripheral side of the laminated glass plate, and wherein the cutting table comprises a cutting bridge arranged above or below a surface of the cutting table and extending longitudinally in a first direction, and a first reference point arranged to move on the surface of the table along a second direction perpendicular to the first direction, the method comprising positioning the first reference point at a predetermined distance from the cutting bridge, positioning the laminated glass plate on the surface of the cutting table using the first reference point to place a corner of the laminated glass plate at the first reference point such that said corner is at the predetermined distance from the cutting bridge and the peripheral side of the laminated glass plate forms the first angle with the first direction, and cutting the laminated glass plate along the at least first diagonal cutting line. This allows to efficiently cut laminated glass plate along cutting lines that form non-orthogonal angles with peripheral sides of the glass laminated plate.

The first reference point may be arranged on a positioning bridge extending longitudinally in a first direction and arranged to move above the surface of the table in the second direction. In this way, the first reference point can move with the positioning bridge to position a corner of the glass laminated plate at a predetermined distance from the cutting bridge.

The first reference point may comprise a mark to indicate where to place the corner of the laminated glass plate. The first reference point may comprise a mechanical support configured to touch the laminated glass plate from both sides of the corner. The first reference point may comprise two mechanical supports. These are very efficient implementations of the first reference point that allow to move or position a glass laminated plate with a corner at a predetermined distance from the cutting bridge and one of the peripheral sides forming a first angle with the cutting bridge such that the laminated glass plate can be cut along a first diagonal cutting line forming the first angle with the peripheral side of the laminated glass plate. The two mechanical supports may each be configured to move to a position wherein, for an intended rotation of the laminated glass plate when said laminated glass plate is placed with each of the two mechanical supports touching one of both sides forming the corner, said position of the two mechanical supports determines the predetermined distance between the cutting bridge and the corner of the laminated glass plate.

The glass cutting table may further comprise a positioning bridge arranged extending longitudinally in the first direction and configured to move in the second direction, wherein the first reference point may be located on the positioning bridge such that moves along with the positioning bridge. This allows to move the first reference point towards or away the cutting bridge by moving the positioning bridge. The positioning bridge can be used to place the laminated glass plate or another laminated glass plate on the surface such that can be cut along a straight cutting line forming a second angle substantially perpendicular with two peripheral side of the laminated glass plate or of the another laminated glass. In this way, a compact and efficient glass cutting table is provided.

The glass cutting table may comprise a second reference point located in the cutting bridge arranged to contact the laminated glass plate such that, when the corner is positioned at the first reference point and the peripheral side rests against the second point of reference. In this way, the second reference point can be used to position the laminated glass plate on the surface of the glass cutting table such that the corner located at the first reference point is at the predetermined distance from the cutting bridge and the peripheral side is forming the desired first angle. This provides an efficient and quick method of cutting laminated glass plates along diagonal cutting line forming a first angle other than zero and other than 90 degrees with the peripheral side of the laminated glass plate.

The second reference point may be arranged to move along the cutting bridge in the first direction. This is a very efficient way of mounting the second reference point.

Positioning the laminated glass plate may comprise moving the positioning bridge in the second direction and/or moving the second reference point along the cutting bridge in the first direction such that, when the peripheral side of the laminated glass plate rests against the second reference point and the corner of the laminated glass is at the first reference point, the peripheral side forms the first angle with the first direction.

Once the first and second reference points are situated at the right position, an operator may place the laminated glass plate such that the peripheral side of the laminated glass plate rests against the second reference point and the corner of the laminated glass is at the first reference point. In this way, the peripheral side will form the first angle with the first direction.

Alternatively, the second reference point may push the peripheral side of the laminated glass plate thereby rotating the laminated glass panel around the corner until the peripheral side forms the first angle with the first direction.

The second reference point may comprise a mark to indicate where to place the laminated glass plate such that the peripheral side of the laminated glass plate forms the first angle with the first direction.

The second reference point may comprise a further mechanical support configured to rest against the peripheral side of the laminated glass plate. The second reference point may be positioned automatically.

The first and second reference points may be arranged to move up and down such that the first and second reference points protrude above the surface or are hidden below the surface of the glass cutting table to free the surface of the glass cutting table.

The first reference point may be arranged to freely rotate around a vertical axis to cause the corner of the laminated glass plate to also rotate around the corner located at the first reference point.

The invention further relates to a glass cutting table for cutting laminated glass plates.

## BRIEF DESCRIPTION OF THE DRAWINGS

Fig. 1 shows a flow chart of a method for cutting laminated glass plates according to an embodiment of the invention.
Figs. 2A-2B illustrate an example of a glass cutting table arranged to perform a method for cutting laminated glass plates according to an embodiment of the invention.
Figs. 3A-3C show examples of first reference points of a glass cutting table according to embodiments of the invention.
Figs. 4A-4C show further details of the glass cutting table of Figs. 2A-2B.

## DESCRIPTION OF THE PREFERRED EMBODIMENT

The same reference signs are used in the different figures to indicate the same elements.

A laminated glass plate is understood to be the assembly of several sheets of glass of any thickness joined together by means of sheets made of plastic materials. A monolithic glass plate means a single sheet of glass of any thickness.

The processes referred to in this invention are those necessary for cutting laminated glass plates.

In addition to the cut itself, the cutting process may also include an operation of removing a transparent metallic film that some laminated glass plates incorporate in their surface to improve their thermal insulation properties. This operation is usually carried out with a grinding wheel or metal brush that polishes a strip (typically 2 centimetres) centred on the line where the cut is to be made. Other operations may also be involved, such as the application of labels, or laser marking.

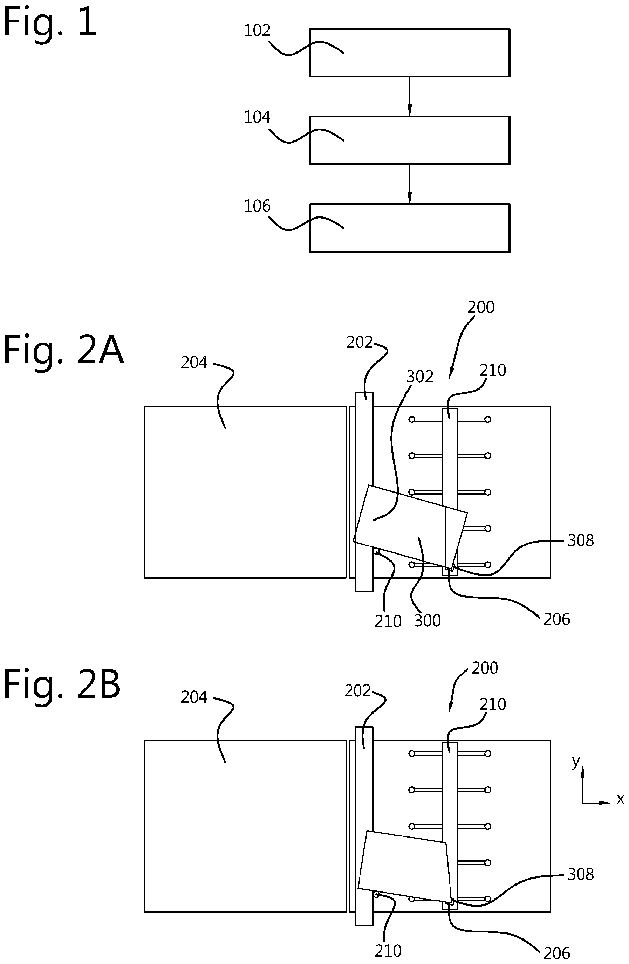

Fig. 1 shows a flow chart of a method for cutting laminated glass plates according to an embodiment of the invention. The laminated glass plate is to be cut along at least a first diagonal cutting line forming a first angle other than zero and other than 90 degrees with a peripheral side of the laminated glass plate. The method is to be performed in a glass cutting table comprising a cutting bridge which can be arranged above or below a surface of the glass cutting table. The cutting bridge extends longitudinally in a first direction Y. The glass cutting table comprises a first reference point arranged to move on the surface of the glass cutting table along a second direction X perpendicular to the first direction Y.

The method of Fig. 1 starts at step 102 wherein the first reference point is positioned at a predetermined distance Z from the cutting bridge. After step 102, the method of Fig. 1 proceeds to step 102 wherein the laminated glass plate is positioned on the surface of the glass cutting table using the first reference point. The laminated glass plate is positioned on the surface of the table such that a corner of the laminated glass plate is at the first reference point and the peripheral side of the laminated glass plate forms the first angle with the first direction. The method of Fig. 1 proceeds then to 106 wherein the cutting bridge cuts the laminated glass plate along the at least first diagonal cutting line.

Figs. 2A-2B show an example of a glass cutting table 200 arranged to perform the method of Fig. 1. The glass cutting table 200 of Figs. 2A-2B comprises a cutting bridge 202 extending across the glass table 200 parallel to a first direction Y. The cutting bridge 202 of Fig. 2 is arranged above the surface 204 of the glass cutting table 200. The cutting bridge 202 may comprise a processing tool (not shown in Figs. 2A-2B) arranged to move along the cutting bridge 202 in a direction parallel to the first direction X. The processing tool may comprise tools for scoring, breaking and/or cutting the laminated glass panel.

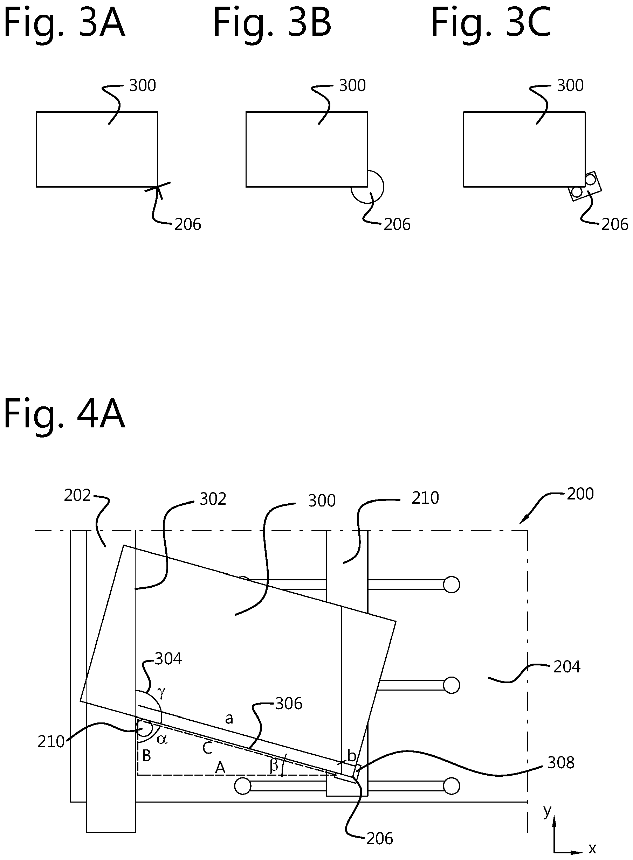

The glass cutting table 200 of Figs. 3A-3B comprises further a positioning bridge 210 extending in a direction parallel to the first direction Y and arranged to move above the surface 204 of the glass cutting table 200 in a direction parallel to the second direction X. The glass cutting table 200 of Figs. 3A-3B comprises a first reference point 206 arranged on the positioning bridge 208. When the positioning bridge 210 moves towards or away from the cutting bridge 202, the first reference point 206 moves together with the cutting bridge 202. In this way, the first reference point 206 may be positioned on the surface 204 of the glass cutting table at the predetermined distance from the cutting bridge 202 as explained in step 102 of the method of Fig. 1. After positioning the first reference point 206 at the predetermined distance, the laminated glass panel 300 will be positioned as explained in step 104 of the method of Fig. 1 such that can be cut according to step 106.

The first reference point 206 shown on Figs. 3A-3B comprises a mechanical support configured to touch the laminated glass plate from both sides of the corner 308. The mechanical support of the first reference point 206 shown on Figs. 3A-3B comprises two bars connected forming an L shape such that the corner 308 of the laminated glass plate 300 can be positioned at the intersection of both bars and each of the bars touches one of the sides of the laminated glass plate forming said corner 308. In this way, the laminated glass panel 300 may be positioned in step102 on the surface 204 of the glass cutting table 200 such that the corner 308 is at the intersection of both bars of the L shape and then the positioning bridge can move until the corner 308 is at a predetermined distance from the cutting bridge 202. Figs. 4A-4C show further details of the glass cutting table 200 of Figs. 2A-2B. Fig. 4A shows how the corner 308 of the glass laminated plate 300 is at a predetermined distance A from the cutting bridge 202.

The first reference point 206 may have any other suitable shape defining a location where to place the corner 308 of the laminated glass plate 300 such that can be positioned at a predetermined distance from the cutting bridge 202.

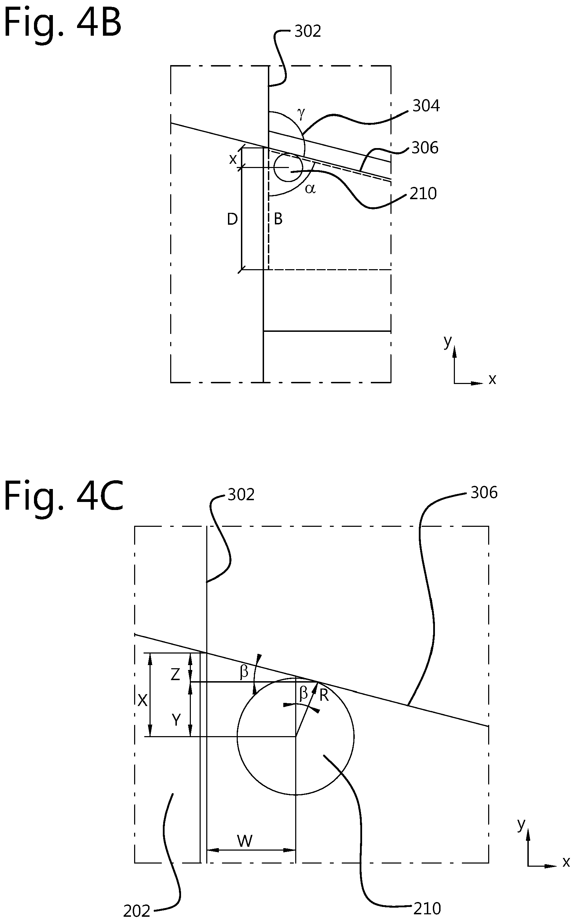

Figures 3A-3C show some examples of other suitable shapes and kind of structures that can be used to implement the first reference point 206. Fig. 4A shows an example wherein the first reference point 206 comprises a mark identifying a point to indicate where to place the corner 308 of the laminated glass plate. Figs. 4B and 4C show further examples of implementations of the first reference point 206. Fig. 4B shows an example of the first reference point 206 comprising a mechanical support with a three-quarter circle shape such that the missing quarter of the circle forms a L shape arranged to contact from both sides the corner 308 of the laminated glass panel 300. Fig. C shows another implementation of the first reference point 206 comprising two mechanical supports with a circle shape wherein each of the mechanical supports touches one of the sides of the laminated glass panel forming the corner 308.

Furthermore, the first reference point 206 may be arranged in any other part of the glass processing table 200 instead on the positioning bridge 208. For instance, the mark of the first reference point 206 shown in Fig. 4A may be located on the surface of the glass cutting table 200 and may be comprise an item that a user operating the glass cutting table 200 can move with the hand from one point to another on the surface of the glass cutting table 200.

The glass cutting table 200 of Figs. 2A-2B comprises a second reference point 210 located in the cutting bridge 202. The second reference point 210 is arranged to contact the laminated glass plate 300 such that, when the corner 308 is positioned at the first reference point 206, the peripheral side 306 rests against the second point of reference 210. The second reference point 210 is arranged to move along the cutting bridge 202 in the first direction Y. The second reference point 210 comprises a mechanical support configured to rest against the peripheral side 306 of the laminated glass plate 300. The second reference point 210 move along the cutting bridge 202 until reaching a position such that, when the peripheral side 306 of the laminated glass plate 300 rests against the second reference point 210 and the corner 308 of the laminated glass plate 300 is at the first reference point 206, the peripheral side 306 forms the first angle 304 with the first direction Y.

In this way, when the first and second reference points are situated at the right position, an operator may place the laminated glass plate 300 such that the peripheral side 306 of the laminated glass plate 300 rests against the second reference point 210 and the corner 308 of the laminated glass plate 300 is at the first reference point 206. In this way, the peripheral side 306 will form the first angle 304 with the first direction Y.

Alternatively, the second reference point 210, while resting against the peripheral side 306 of the laminated glass panel 300, may push the peripheral side 306 of the laminated glass plate 300 thereby causing the laminated glass panel 300 to rotate around the corner 308 located at the first reference point 206 until the corner 308 of the laminated glass plate is at the predetermined distance A to the cutting bridge 202 and the peripheral side 306 forms the first angle 304 with the first direction X. In this way, the second reference point 210 may be moved automatically along the cutting bridge 202 to the position causing the laminated glass plate to form the first angle 304. In this way, the laminated glass plate 300 may be automatically positioned in step 104 of the method of Fig. 1 by moving the cutting bridge 202 in the second direction X and/or moving the second reference point 210 along the cutting bridge 202 in the first direction Y such that the second reference point 210 pushes the peripheral side 306 of the laminated glass plate thereby rotating the laminated glass panel around the corner until the peripheral side forms the first angle 304 with the first direction.

Furthermore, the first and second reference points 206 and 210 may be arranged to move up and down such that the first and second reference points 206 and 210 protrude above the surface 204 or are hidden below the surface 204 of the glass cutting table 200 to free the surface 204. The first reference point 206 is arranged to freely rotate around a vertical axis to cause the corner 308 of the laminated glass plate 300 to also rotate around the corner located at the first reference point.

As said, Figs. 4A-4C show further details of the glass cutting table of Figs. 2A-2B. It will be explained now how to calculate the position of the first and second reference points 210 and 206 to cut the laminated glass plate along the cutting line 302 which forms a first angle 304 with the peripheral side 306. The cutting line 302 starts at the peripheral side 306 at a distance a + b from the corner 308. The distance a + b and the first angle 306, which will be called $\gamma$ in the below equations, are known. Then from Fig. 4A it can be seen that $\alpha = 180 - \gamma$ and therefore the predetermined distance A at which the first reference point 206 has to be positioned from the cutting bridge 202 is $A = (a + b) \cdot \sin \alpha$. In Figs. 4B and 4B, the first angle $\gamma$, the radius R of the second reference point 210, and the distance W from the centre of the second reference point 210 to the cutting line 302 are also known. Therefore, the below equations can be used to obtain the distance D and the second reference point 210 can be correctly positioned for performing the cut 302.

$$\beta = \gamma - 90$$

$$Y = R \cdot \cos \beta$$

$$Z = (W + R \cdot \sin \beta) \cdot \tan \beta$$

$$X = Y + Z$$

$$B = (a + b) \cdot \sin \beta$$

$$D = B - X$$

## Claims

1. A cutting method for a glass cutting table (200) for cutting a laminated glass plate (300), wherein the laminated glass plate (300) is to be cut along at least a first diagonal cutting line (302) forming a first angle (304) other than zero and other than 90 degrees with a peripheral side (306) of the laminated glass plate (300), and wherein the glass cutting table (200) comprises a cutting bridge (202) arranged above or below a surface (204) of the glass cutting table (200) and extending longitudinally in a first direction (Y), and a first reference point (206) arranged to move on the surface (204) of the glass cutting table (200) along a second direction (X) perpendicular to the first direction (Y), the method comprising:

   positioning (102) the first reference point (206) at a predetermined distance (A) from the cutting bridge (202);
   positioning (104) the laminated glass plate (300) on the surface (204) of the glass cutting table (200) using the first reference point (206) to place a corner (308) of the laminated glass plate at the first reference point (206) such that said corner (308) is at the predetermined distance from the cutting bridge and the peripheral side of the laminated glass plate forms the first angle with the first direction; and
   cutting (106) the laminated glass plate along the at least first diagonal cutting line.

2. The cutting method according to any of the previous claims, wherein the first reference point (206) is arranged on a positioning bridge (208) extending longitudinally in the first direction (Y) and arranged to move above the surface (204) of the glass cutting table in the second direction (X).

3. The cutting method according to any of the previous claims, wherein the first reference point (306) comprises a mark to indicate where to place the corner (308) of the laminated glass plate.

4. The cutting method according to claims 1 or 2, wherein the first reference point (206) comprises a mechanical support configured to touch the laminated glass plate from both sides of the corner (308).

5. The cutting method, according to claim 1, wherein the first reference point (206) comprises two mechanical supports each configured to move to a position wherein, for an intended rotation of the laminated glass plate when said laminated glass plate is placed with each of the two mechanical supports touching one of both sides forming the corner (308), said position of the two mechanical supports determines the predetermined distance between the cutting bridge and the corner of the laminated glass plate.

6. The cutting method according to claim 2, wherein the positioning bridge (208) is arranged extending longitudinally in the first direction and configured to move in the second direction, wherein the first reference point is located on the positioning bridge (208) such that moves along with the positioning bridge, and wherein the positioning bridge (208) can be used to place the laminated glass plate or another laminated glass plate on the surface (204) such that can be cut along a straight cutting line forming a second angle substantially perpendicular with two peripheral side (306) of the laminated glass plate or of the another laminated glass.

7. The cutting method according to any of the preceding claims, wherein the glass cutting table (200) comprises a second reference point (210) located in the cutting bridge (202) and arranged to contact the laminated glass plate at the peripheral side (306) when the corner (308) is positioned at the first reference point (206).

8. The cutting method according to claim 7, wherein the second reference point (210) is arranged to move along the cutting bridge (202) in the first direction (Y) such that, when the peripheral side (306) of the laminated glass plate 300 rests against the second reference point (210) and the corner (308) is positioned at the first reference point (206), the corner (308) is at the predetermined distance from the cutting bridge and the peripheral side of the laminated glass plate forms the first angle with the first direction.

9. The cutting method according to claim 8, wherein positioning the laminated glass plate comprises moving the cutting bridge (202) in the second direction (X) and/or moving the second reference point

(210) along the cutting bridge (202) in the first direction (Y) such that the second reference point (210) pushes the peripheral side (306) of the laminated glass plate thereby rotating the laminated glass panel around the corner until the peripheral side forms the first angle (304) with the first direction.

10. The cutting method according to claim 7, wherein the second reference point (210) comprises a mark to indicate where to place the laminated glass plate such that the peripheral side of the laminated glass plate forms the first angle with the first direction.

11. The cutting method according to claim 7, wherein the second reference point (210) comprises a further mechanical support configured to rest against the peripheral side of the laminated glass plate.

12. The cutting method according to any of claims 7, wherein the second reference point (210) is positioned automatically.

13. The cutting method according to claim 7, wherein the first and second reference points are arranged to move up and down such that the first and second reference points protrude above the surface or are hidden below the surface of the table to free the surface of the glass cutting table.

14. The cutting method according to any of the preceding claims, wherein first reference point is arranged to freely rotate around a vertical axis to cause the corner of the laminated glass plate to also rotate around the corner located at the first reference point.

15. A cutting table for cutting laminated glass plates arranged to perform the method according to any of the preceding claims.

# Fig. 1

# Fig. 2A

# Fig. 2B

# Fig. 3A  Fig. 3B  Fig. 3C

# Fig. 4A

# Fig. 4B

# Fig. 4C

Europäisches
Patentamt

European
Patent Office

Office européen
des brevets

## EUROPEAN SEARCH REPORT

**Application Number**

EP 24 38 2454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 064 478 A1 (BOTTERO SPA [IT]) 7 September 2016 (2016-09-07) | 15 | INV. C03B33/03 |
| A | * figures 1,3-5 * | 1-14 | C03B33/07 |
| X | EP 1 566 365 A1 (BAVELLONI Z SPA [IT]) 24 August 2005 (2005-08-24) | 15 | |
| A | * figures 5A-5D * | 1-14 | |

**TECHNICAL FIELDS SEARCHED (IPC)**

C03B

The present search report has been drawn up for all claims

| Place of search | Date of completion of the search | Examiner |
|---|---|---|
| The Hague | 23 September 2024 | Marrec, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 640 644 A1**

## ANNEX TO THE EUROPEAN SEARCH REPORT
## ON EUROPEAN PATENT APPLICATION NO.

EP 24 38 2454

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | Publication date | Patent family member(s) | | Publication date |
|---|---|---|---|---|---|
| EP 3064478 | A1 | 07-09-2016 | NONE | | |
| EP 1566365 | A1 | 24-08-2005 | CN | 1680204 A | 12-10-2005 |
| | | | EP | 1566365 A1 | 24-08-2005 |
| | | | JP | 2005231993 A | 02-09-2005 |
| | | | KR | 20060041987 A | 12-05-2006 |
| | | | TW | 200536795 A | 16-11-2005 |
| | | | US | 2005178258 A1 | 18-08-2005 |

EPO FORM P0459

For more details about this annex : see Official Journal of the European Patent Office, No. 12/82